# FASCICULE DE BREVET EUROPEEN

(11) **EP 1 227 031 B1**
(45) Date de publication et mention de la délivrance du brevet: **29.10.2003**
(21) Numéro de dépôt: 01400115.0
(22) Date de dépôt: 16.01.2001
(51) Int. Cl.: B62D 29/00, B29C 70/68

(54) **Elément structurel comprenant un corps et des nervures de renfort et véhicule automobile correspondant**
Strukturelement mit Gehäuseteil und gerippter Stützstruktur, und korrespondierendes Kraftfahrzeug
Structural element with body and reinforcement ribs, and corresponding automobile

(30) Priorité: 17.01.2000 FR 0000535
(43) Date de publication de la demande: 31.07.2002
(73) Titulaire: Faurecia Industries, 92100 Boulogne (FR)
(72) Inventeur: Laurent, Claude, 25420 Voujeaucourt (FR)
(74) Mandataire: Domenego, Bertrand

(56) Documents cités:
- EP-A- 0 967 138
- EP-A- 0 995 668
- US-A- 6 092 864

## Description

L'invention concerne un élément structurel du type comprenant un corps présentant une cavité, des nervures de renfort en matière plastique disposées dans la cavité et des moyens de fixation des nervures au corps.

L'invention s'applique en particulier aux véhicules automobiles dans lesquels des éléments du type précité peuvent être utilisés, par exemple, pour la réalisation de faces avant, de poutres de pare-chocs, ou de panneaux de portes.

Un élément du type précité est connu de EP-0 370 342. Dans cet élément, la fixation des nervures sur le corps est assurée par des orifices, qui sont ménagés dans le corps et que la matière plastique des nervures traverse pour déborder autour de ces orifices. La fixation peut également être complétée par moulage de la matière plastique des nervures sur des reliefs réalisés à l'intérieur du corps. Toutefois, la réalisation d'un tel élément structurel est relativement compliquée. En effet, la nécessité de faire traverser par la matière plastique des orifices répartis dans le corps conduit à des moules relativement complexes, notamment pour que leur étanchéité soit satisfaisante.

Un autre élément tel que décrit par le préambule de la revendication 1 est connu de EP-0 995 668 A₁.

Un but de l'invention est donc de fournir un élément structurel du type précité qui puisse être réalisé plus simplement.

A cet effet, l'invention a pour objet un élément structurel du type précité, caractérisé en ce que les moyens de fixation comprennent des régions discrètes en retrait d'au moins un bord extérieur du corps et des blocs venus de matière avec les nervures, lesquels blocs enveloppent le bord extérieur dans ses régions en retrait.

Selon des modes particuliers de réalisation, l'élément structurel peut comprendre l'une ou plusieurs des caractéristiques suivantes, prise(s) isolément ou selon toutes les combinaisons techniquement possibles :
- les régions en retrait ont des formes étagées présentant des angles,
- les régions en retrait présentent au moins des parties convergeant vers l'extérieur du corps,
- les parties convergentes des régions en retrait ont sensiblement une forme de trapèze,
- les régions en retrait sont formées par des encoches ménagées dans le corps,
- les moyens de fixation comprennent des régions discrètes en retrait de deux bords extérieurs du corps disposés de part et d'autre de la cavité, et des blocs venus de matière avec les nervures et enveloppant les deux bords dans leurs régions en retrait, et
- le corps est métallique.

L'invention a en outre pour objet un véhicule automobile équipé d'un élément structurel tel que défini ci-dessus.

L'invention sera mieux comprise à l'aide de la description qui va suivre, donnée uniquement à titre d'exemple et faite en se référant aux dessins annexés, sur lesquels :
- la figure 1 est une vue partielle schématique et en perspective d'un élément structurel selon l'invention,
- les figures 2 et 3 sont des vues partielles schématiques et en coupe, prises respectivement suivant les plans II-II et III-III de la figure 1,
- la figure 4a est une vue schématique latérale d'une encoche du corps de l'élément de la figure 1, et
- les figures 4b à 4e sont des vues analogues à la figure 4a illustrant des variantes de l'élément de la figure 1.

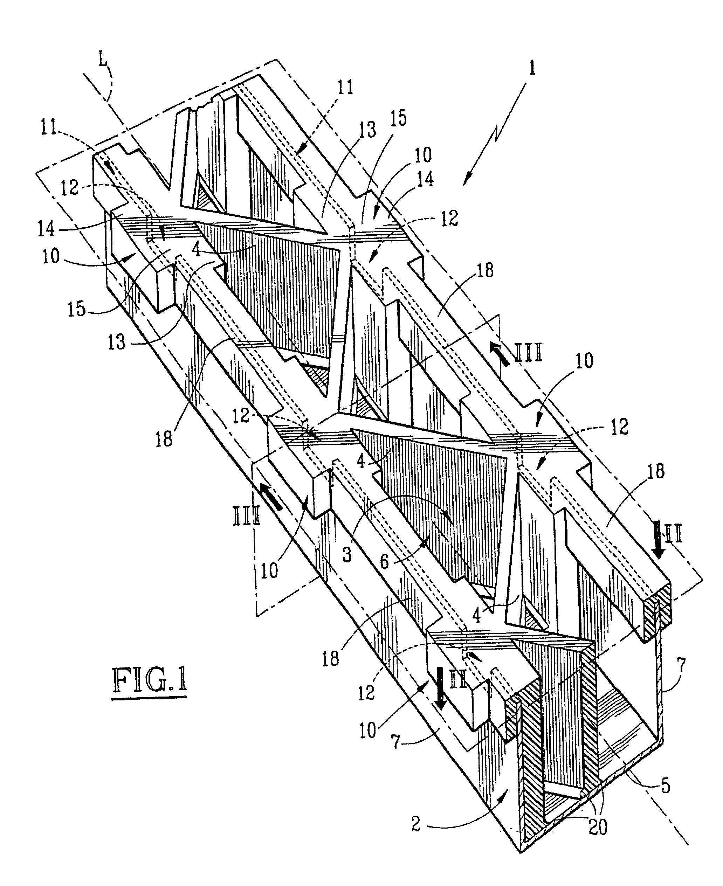

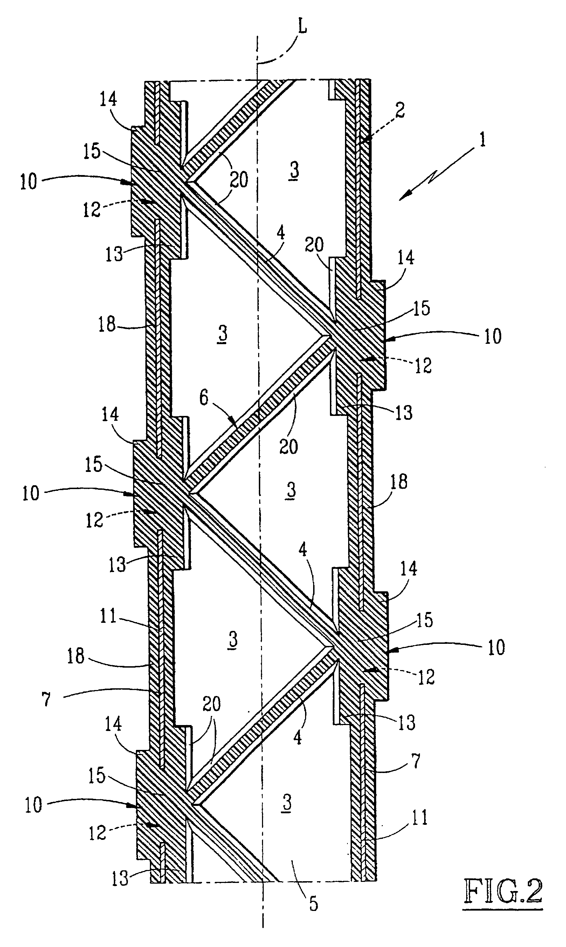

Les figures 1 à 3 illustrent un élément structurel 1, par exemple destiné à former une partie supérieure d'une face avant d'un véhicule automobile.

Cet élément 1 est un longeron comprenant un corps de base 2 concave définissant intérieurement une cavité 3. Plus spécifiquement, le corps 2 représenté est un profilé métallique en U s'étendant suivant une direction longitudinale L. Le corps 2 a par exemple été obtenu par emboutissage d'une tôle d'aluminium ou d'un autre métal.

L'élément 1 comprend en outre des nervures de renfort 4 en V, qui sont jointives et disposées, dans la cavité 3 sur l'âme 5 du corps 2, les unes à la suite des autres le long de la direction L.

Les nervures 4 sont formées par des parties successives d'un voile 6 d'une matière plastique. Le voile 4 zigzague entre les deux ailes latérales 7 du corps 2. La matière plastique du voile 4 est par exemple du polyamide ou du polypropylène.

Les nervures 4 sont liées rigidement au corps 2 au moyen de blocs de fixation 10 venus de matière avec les nervures 4, et enveloppant les bords extérieurs supérieurs 11 des ailes 7 du corps 2 au niveau d'encoches 12 ménagées dans les extrémités supérieures des ailes 7.

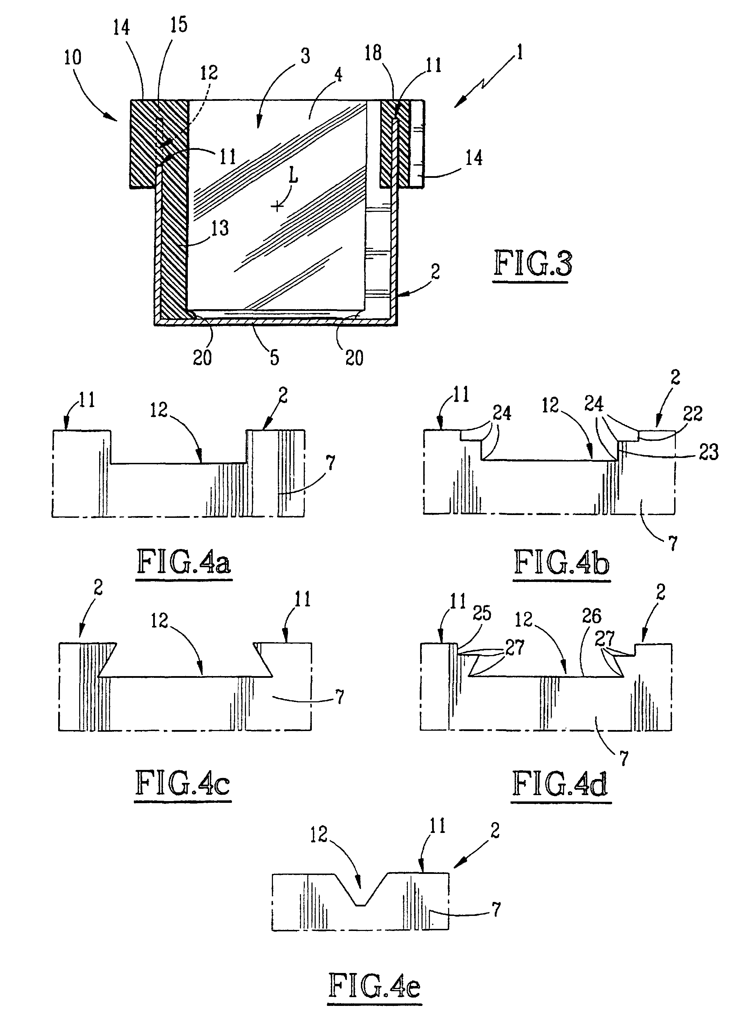

Ces encoches 12 sont identiques et de forme rectangulaire, comme on le voit sur la figure 4a. Ces encoches 12 délimitent donc des régions discrètes en retrait des bords 11.

Les encoches 12 d'un même bord 11 sont espacées régulièrement les unes des autres. Les encoches 12 sont ménagées de manière alternée sur les deux bords 11 qui sont situés de part et d'autre de la cavité 3.

Chaque bloc de fixation 10 enveloppe le bord extérieur 11 correspondant sur une longueur légèrement supérieure à celle de l'encoche 12 correspondante. Plus particulièrement, le bloc 10 considéré comprend une plaque intérieure 13 sensiblement rectangulaire et s'étendant dans la cavité 3 contre l'aile 7 correspondante sur toute la hauteur de cette dernière. Le bloc 10 comprend également une plaque extérieure 14 de dimensions légèrement supérieures à celles de l'encoche 12, mais de hauteur et de longueur nettement plus faibles que celles de la plaque intérieure 13. Cette plaque extérieure 14 s'étend contre la surface extérieure de l'aile 7 correspondante. Les plaques 13 et 14 sont reliées par une partie de liaison 15 qui est venue de matière avec les plaques 13 et 14 et qui traverse l'encoche 12.

Les blocs 10 d'un même bord 11 sont liés les uns aux autres par des baguettes 18 venues de matière avec les blocs 10 et qui enveloppent les bords 11.

Les plaques intérieures 13 des blocs 10 et les nervures 4 possèdent des parties inférieures 20 élargies formant pieds d'appui sur l'âme 5 du corps 2.

Les blocs 10 sont disposés au niveau de chaque pointe formée par les nervures 4.

Les pointes formées par les nervures 4 sont reliées aux blocs 10 par venue de matière dans les régions médianes des plaques intérieures 13 des blocs 10. Les nervures 4 prennent donc appui latéralement sur les ailes 7 du corps 2 par l'intermédiaire des plaques intérieures 13 des blocs 10.

L'élément structurel 1 peut être réalisé, par exemple, par surmoulage par injection de la matière plastique des nervures 4, des blocs 10 et des baguettes 18 sur le corps 2.

L'élément structurel 1 est donc léger, relativement peu coûteux et présente des caractéristiques mécaniques, notamment de rigidité relativement importante.

Les nervures 4 sont liées rigidement au corps 2 par ancrage des blocs 10 sur les bords 11 au niveau des encoches 12, sans qu'il soit nécessaire de prévoir d'autres moyens de fixation dans d'autres zones du corps 2 que ses bords 11. En particulier, il n'est pas nécessaire de ménager des orifices dans l'âme 5 et dans les ailes 7 du corps 2 pour qu'ils soient traversés par la matière plastique des nervures 4.

Par conséquent, l'élément structurel 1 peut être réalisé dans des moules relativement simples qui ne doivent permettre le passage de la matière plastique de part et d'autre des parois du corps 2 qu'au niveau des bords extérieurs 11.

De plus, l'invention permet de réaliser des éléments structurels dans lesquels la fixation des nervures 4 sur le corps 2 est assurée au moins partiellement de manière différente que dans le cas de EP-0 370 342.

L'ancrage de la matière plastique dans le corps 2 peut être réalisé grâce à des encoches 12 d'autres formes que celle de la figures 4a.

Selon la variante de la figure 4b, les encoches 12 ont une forme étagée correspondant à un rectangle supérieur 22 de plus grande longueur et à un rectangle inférieur 23 de plus petite longueur. Ainsi, les encoches 12 ont sensiblement une forme de T. Cette variante permet d'améliorer l'ancrage des blocs 10 sur les ailes 7 grâce aux nombreux angles 24 que présente chaque encoche 12.

Selon la variante de la figure 4c, chaque encoche 12 a une forme sensiblement en queue d'aronde contenante ou trapèze. Les encoches 12 convergent vers l'extérieur du corps 2.

Cette variante permet également d'améliorer la fixation des nervures 4 sur le corps 2.

Selon la variante de la figure 4d, chaque encoche 12 a une forme étagée correspondant à un rectangle supérieur 25 de plus grande longueur et à une queue d'aronde contenante ou trapèze inférieur 26 de plus petite longueur.

L'ancrage des blocs 10 sur les ailes 7 est amélioré grâce aux nombreux angles 27 des encoches 12 et au fait que les trapèzes 26 convergent vers l'extérieur.

Selon la variante de la figure 4e, les encoches 12 ont sensiblement des formes en V.

Selon d'autres variantes, le corps 2 peut être réalisé non pas en métal mais en matière plastique.

Selon encore une autre variante, les baguettes 18 sont supprimées.

De manière plus générale, les nervures 4 peuvent avoir des formes différentes par exemple des formes en X.

## Revendications

1. Elément structurel (1) du type comprenant un corps (2) présentant une cavité (3), des nervures de renfort (4) en matière plastique disposées dans la cavité (3) et des moyens (10, 12) de fixation des nervures (4) au corps (2), **caractérisé en ce que** les moyens de fixation comprennent des régions discrètes en retrait (12) d'au moins un bord extérieur (11) du corps (2) et des blocs (10) venus de matière avec les nervures (4), lesquels blocs (10) enveloppent le bord extérieur (11) dans ses régions en retrait (12).

2. Elément selon la revendication 1, **caractérisé en ce que** des régions en retrait (12) ont des formes étagées présentant des angles (24, 27).

3. Elément selon la revendication 1 ou 2, **caractérisé en ce que** des régions en retrait présentent au moins des parties (12, 26) convergeant vers l'extérieur du corps (2).

4. Elément selon la revendication 3, **caractérisé en ce que** les parties convergentes (12, 26) des régions en retrait ont sensiblement une forme de trapèze.

5. Elément selon l'une quelconque des revendications 1 à 4, **caractérisé en ce que** les régions en retrait (12) sont formées par des encoches ménagées dans le corps (2).

6. Elément selon l'une quelconque des revendications 1 à 5, **caractérisé en ce que** les moyens de fixation comprennent des régions discrètes en retrait (12) de deux bords extérieurs (11) du corps (2) disposés de part et d'autre de la cavité (3), et des blocs (10) venus de matière avec les nervures (4) et enveloppant les deux bords (11) dans leurs régions en retrait (12).

7. Elément selon l'une quelconque des revendications 1 à 6, **caractérisé en ce que** le corps (2) est métallique.

8. Véhicule automobile comprenant un élément structurel selon l'une quelconque des revendications 1 à 7.

## Patentansprüche

1. Strukturelement (1) des Typs, der einen Körper (2) mit einem Hohlraum (3), Verstärkungsrippen (4) aus Kunststoff, die in dem Hohlraum (3) angeordnet sind, sowie Mittel (10, 12) für die Befestigung der Rippen (4) am Körper (2) umfaßt, **dadurch gekennzeichnet, daß** die Befestigungsmittel vertiefte diskrete Bereiche (12) wenigstens eines äußeren Randes (11) des Körpers (2) sowie mit den Rippen (4) einteilig ausgebildete Blöcke (10) umfassen, wobei die Blöcke (10) den äußeren Rand (11) in den vertieften Bereichen (12) umgeben.

2. Element nach Anspruch 1, **dadurch gekennzeichnet, daß** die vertieften Bereiche (12) gestufte Formen besitzen, die Ecken (24, 27) aufweisen.

3. Element nach Anspruch 1 oder 2, **dadurch gekennzeichnet, daß** die vertieften Bereiche wenigstens Teile (12, 26) aufweisen, die zur Außenseite des Körpers (2) zusammenlaufen.

4. Element nach Anspruch 3, **dadurch gekennzeichnet, daß** die zusammenlaufenden Teile (12, 26) der vertieften Bereiche im wesentlichen trapezförmig sind.

5. Element nach einem der Ansprüche 1 bis 4, **dadurch gekennzeichnet, daß** die vertieften Bereiche (12) durch im Körper (2) ausgesparte Nuten gebildet sind.

6. Element nach einem der Ansprüche 1 bis 5, **dadurch gekennzeichnet, daß** die Befestigungsmittel vertiefte diskrete Bereiche (12) in zwei beiderseits des Hohlraums (3) angeordneten äußeren Rändern (11) des Körpers (2) sowie mit den Rippen (4) einteilig ausgebildete Blöcke (10), die die beiden Ränder (11) in ihren vertieften Bereichen (12) umgeben, umfassen.

7. Element nach einem der Ansprüche 1 bis 6, **dadurch gekennzeichnet, daß** der Körper (2) metallisch ist.

8. Kraftfahrzeug, das ein Strukturelement nach einem der Ansprüche 1 bis 7 umfaßt.

## Claims

1. Structural element (1) of the type comprising a body (2) having a cavity (3), reinforcing ribs (4) which are made of plastics material and are arranged in the cavity (3), and means (10, 12) for fixing the ribs (4) to the body (2), **characterised in that** the fixing means comprise discrete recessed regions (12) of at least one outer edge (11) of the body (2) and blocks (10) which are in one piece with the ribs (4), which blocks (10) envelop the outer edge (11) in its recessed regions (12).

2. Element according to claim 1, **characterised in that** recessed regions (12) are in stepped form with corners (24, 27).

3. Element according to either claim 1 or claim 2, **characterised in that** recessed regions exhibit at least portions (12, 26) that converge towards the outside of the body (2).

4. Element according to claim 3, **characterised in that** the converging portions (12, 26) of the recessed regions are substantially trapezoidal in shape.

5. Element according to any one of claims 1 to 4, **characterised in that** the recessed regions (12) are formed by notches provided in the body (2).

6. Element according to any one of claims 1 to 5, **characterised in that** the fixing means comprise discrete recessed regions (12) of two outer edges (11) of the body (2) arranged on either side of the cavity (3), and blocks (10) which are in one piece with the ribs (4) and envelop the two edges (11) in their recessed regions (12).

7. Element according to any one of claims 1 to 6, **characterised in that** the body (2) is made of metal.

8. Automotive vehicle comprising a structural element according to any one of claims 1 to 7.
